# EUROPEAN PATENT APPLICATION

(11) **EP 3 636 939 A1**
(43) Date of publication of application: **15.04.2020**
(21) Application number: 18199325.4
(22) Date of filing: 09.10.2018
(51) Int. Cl.: F16B 13/06

(54) **EXPANSION ANCHOR WITH GROOVED ANCHOR BOLT**

(71) Applicant: Hilti Aktiengesellschaft, 9494 Schaan (LI)
(72) Inventor: Shimahara, Hideki, 9472 Grabs (CH)
(74) Representative: Hilti Aktiengesellschaft Corporate Intellectual Property

(57) **Abstract**

The invention relates to an expansion anchor comprising an anchor bolt (10), and at least one expansion shell (30) located at the anchor bolt, wherein the anchor bolt comprises a wedge zone (12), a neck zone (13) located rearwardly of the wedge zone, an abutment zone (14) forming a rearward stop for the expansion shell (30), the abutment zone (14) being located rearwardly of an intermediate zone (15), whren the anchor bolt is, within the neck zone (13), provided with at least one longitudinally running neck zone groove (23), and wherein the anchor bolt is, within the intermediate zone (15), provided with at least one longitudinaly running intermidiate zone groove (25).

## Description

The invention relates to an expansion anchor according to the preamble of claim 1. Such an expansion anchor comprises an anchor bolt, and at least one expansion shell located at the anchor bolt, wherein the anchor bolt comprises a wedge zone for expanding the at least one expansion shell, a neck zone accommodating at least parts of the expansion shell, the neck zone being located rearwardly of the wedge zone, an abutment zone forming a rearward stop for the expansion shell, the abutment zone being located rearwardly of the neck zone, an intermediate zone, the intermediate zone being located rearwardly of the abutment zone, and a rear zone for intruding tensile force into the anchor bolt, the rear zone being located rearwardly of the intermediate zone, wherein the anchor bolt is, within the neck zone, provided with at least one longitudinally running neck zone groove.

EP2848825 A1 discloses an expansion anchor according to the preamble of claim 1. In case of EP2848825 A1, the expansion sleeve has at least one web on its inner side, which web engages a groove provided in the neck zone of the anchor bolt. During installation, the web is displaced radially outwardly by the wedge zone of the anchor bolt, i.e. the material of the web is activated, to yield particularly wide expansion.

DE2256822 A1 shows an expansion anchor in which a rotational lock is provided between the expansion sleeve and the anchor bolt. This rotational lock might be formed by a groove located in the neck zone of the anchor bolt, and a corresponding protrusion, which protrudes from the expansion sleeve.

EP0515916 A2 and DE3411285 A1 describe fasteners. In both cases, sleeves interlock with inner bolts via toothings.

WO17067945 A1 describes a method for anchoring an expansion anchor in a hole, in which the expansion anchor is first expanded and the space between the wall of the hole and the anchor bolt is then filled with a hardenable mass, such that the hardenable mass reaches the abutment zone of the anchor bolt.

It is an object of the invention to provide an expansion anchor which, whilst providing good and reliable performance, can be manufactured particularly easily and at particularly low expense and effort, and which can also provide added functionality.

This object is achieved by an expansion anchor according to claim 1. Dependent claims refer to preferred embodiments of the invention.

According to the invention, the anchor bolt is, within the intermediate zone, provided with at least one longitudinally running intermediate zone groove.

Thus, the invention proposes to provide both the neck zone, i.e. the zone located right in front of the abutment zone, and the intermediate zone, i.e. the zone located right behind the abutment zone, with a grooved structure.

The at least one neck zone groove provided in the neck zone can functionally interact with the adjacent expansion shell, for example to provide a rotational interlock or to accommodate expansion shell material that is to be radially displaced by the wedge zone when the anchor is loaded. The invention has found that it can be advantageous to also provide the intermediate zone with at least one groove, namely the intermediate zone groove, even when the expansion shell is axially spaced from the intermediate zone, so that no direct interaction with the expansion shell is possible. Firstly, this allows to reduce the quantity of required material when manufacturing the anchor. Moreover, the resulting anchor bolt design can be particularly symmetric, which can, due to the resulting force distribution, be favourable from a manufacturing point of view, in particular when cross wedge rolling is employed. These advantages can be achieved without negative effects on anchor performance: Since the neck zone has to accommodate the expansion shell, the neck zone usually has to have minimum cross section. However, since the neck zone is provided with a groove structure, the intermediate zone can be provided with a groove structure as well, without further weakening the anchor bolt and without affecting overall anchor performance. In addition, the inventive intermediate zone groove can facilitate material transport in those applications where hardenable mass is inserted into the hole.

The anchor bolt is an elongate body. The expansion shell is located adjacent to the anchor bolt, so that it can be, for the purpose of anchoring the expansion anchor, radially displaced when the anchor bolt is loaded in the rearwards direction.

Preferably, the wedge zone, the neck zone, the abutment zone, the intermediate zone, and the rear zone of the anchor bolt are integral, which can ease manufacturing and improve performance. The wedge zone, the neck zone, the abutment zone, the intermediate zone, and the rear zone are non-overlapping, i.e. separate, in the axial direction. In particular, the wedge zone is adjacent to the neck zone, the neck zone is adjacent to the abutment zone, and/or the abutment zone is adjacent to the intermediate zone. The intermediate zone can be adjacent to the rear zone, or there can also be a bulged zone or another zone between the intermediate zone and the rear zone.

The anchor bolt defines a longitudinal axis, which advantageously can also be the longitudinal axis of the expansion anchor. Following the usual definition, the longitudinal axis can in particular be that axis that runs in the longitudinal direction, i.e. in the long direction of the anchor bolt. Where the terms "radially", "axially", "longitudinally", "circumferentially", "forwards", "rearwards", "back", and so forth are used, this should in particular be understood with respect to the longitudinal axis of the anchor bolt.

In the wedge zone, the anchor bolt forms a wedge for the expansion shell, which wedge converges towards the rear of the anchor bolt, so that the wedge zone can radially displace the expansion shell when the anchor bolt is loaded in the rearwards direction. For example, the anchor bolt can be conical in the wedge zone. However, more complex converging designs, including, for example, groove shaped axial wedge zone channels extending in the wedge zone, can be particularly preferred.

The neck zone is located axially between the wedge zone and the abutment zone. At least a part of the expansion shell, preferably a significant part of the expansion shell, axially overlaps the neck zone, at least before installation of the expansion anchor. Thus, the neck zone at least partly accommodates the expansion shell. In the neck zone, the anchor bolt is preferably cylindrical, in particular cylindrical with a non-circular base, with the non-circularity being caused, at least amongst others, by the neck zone groove.

In the abutment zone, the anchor bolt has a shape that blocks a rearward movement of the expansion shell relative to the anchor bolt. Thus, the abutment zone can advance the expansion shell into a hole when the anchor bolt is inserted into a hole. In particular, the anchor bolt can have greater maximum diameter and/or maximum radius in the abutment zone when compared to the neck zone and preferably also when compared to the intermediate zone.

The intermediate zone connects the abutment zone with the rear zone, i.e. it is located between the abutment zone and the rear zone. In the intermediate zone, the anchor bolt is preferably cylindrical, in particular cylindrical with a non-circular base, with the non-circularity being caused, at least amongst others, by the intermediate zone groove. As already mentioned above, the expansion shell can be axially spaced from the intermediate zone.

The rear zone is for introducing rearwardly directed tensile forces into the anchor bolt, i.e. for loading the anchor. Preferably, the anchor bolt is threaded, in particular threaded throughout, in the rear zone, wherein the thread allows force transmission. Thus, the rear zone is preferably a thread zone, in particular an outer thread zone. However, in an alternative embodiment, the anchor bolt can also have a larger-diameter head in the rear zone, which is particularly preferred for low load applications.

In particular, the thread of the rear zone does not extend into the intermediate zone, i.e. the thread of the rear zone is remote from the intermediate zone. In particular, the intermediate zone and/or the neck zone are threadless.

The neck zone groove runs in particular parallel to the longitudinal axis of the anchor bolt. In particular, the long axis of the neck zone groove extends parallel to the longitudinal axis of the anchor bolt. The neck zone groove does not form a thread, and the neck zone is preferably unthreaded. Preferably, the flanks of the neck zone groove run parallel to the longitudinal axis of the anchor bolt. The neck zone groove is provided on the lateral surface of the anchor bolt, i.e. the neck zone groove forms a depression in the lateral surface of the anchor bolt.

The intermediate zone groove runs in particular parallel to the longitudinal axis of the anchor bolt. In particular, the long axis of the intermediate zone groove extends parallel to the longitudinal axis of the anchor bolt. The intermediate zone groove does not form a thread, and the intermediate zone is preferably unthreaded. Preferably, the flanks of the intermediate zone groove run parallel to the longitudinal axis of the anchor bolt. The intermediate zone groove is provided on the lateral surface of the anchor bolt, i.e. the intermediate zone groove forms a depression in the lateral surface of the anchor bolt.

In particular, the neck zone groove and the intermediate zone groove have a long extension each, and this long extension runs longitudinally, i.e. parallel to the longitudinal axis.

Preferably, the anchor bolt and/or the expansion shell are steel parts each. They can for example comprise carbon steel or stainless steel.

According to a preferred embodiment of the invention, the at least one intermediate zone groove is aligned with the at least one neck zone groove. In other words, the intermediate zone groove lies in a virtual extension of the neck zone groove. More preferably, there is no circumferential offset between the intermediate zone groove and the neck zone groove. This can further improve symmetry of force and facilitate manufacturing.

It is particularly advantageous if the at least one neck zone groove spans the entire neck zone and/or the at least one intermediate zone groove spans the entire intermediate zone. This can further reduce material requirement and improve functionality. In particular, the at least one neck zone groove can extend into the wedge zone and the at least one intermediate zone groove can extend into the bulged zone.

Preferably, the intermediate zone has greater length than the abutment zone and/or the neck zone has greater length than the abutment zone, which can further ease manufacturing and/or improve performance. Accordingly, the at least one intermediate zone groove has preferably greater length than the abutment zone and/or the at least one neck zone groove has preferably greater length than the abutment zone. It is particular advantageous if the at least one intermediate zone groove and the at least one neck zone groove have the same length. In particular, length can be considered to be the longitudinal extension.

The intermediate zone is preferably at least twice as long, in the axial direction, as the abutment zone, more preferably at least three times as long. It is particularly useful if the neck zone and the intermediate zone have same length. This can further increase symmetry, and the higher symmetry can further improve the manufacturing process and performance, due to the resulting symmetry of force during manufacturing and operation.

Advantageously, the intermediate zone and the neck zone have the same minimum radius r and/or the same maximum radius r. Alternatively or additional, it is preferred that the intermediate zone and the neck zone have the same minimum diameter d and/or the same maximum diameter d. Both allows to further reduce material requirement.

According to another preferred embodiment of the invention, the intermediate zone and the neck zone are, at least regionally, mirror symmetric, in particular with respect to a plane of symmetry that is perpendicular to the longitudinal axis and/or that traverses the intermediate zone. Such a highly symmetric setup can further improve the manufacturing process and performance, due to the resulting symmetry of force during manufacturing and operation, and reduce the quantity of required material. The two zones can be only regionally mirror symmetric, which implies that they can have regions that are mirror symmetric and other regions which are not. Preferably, the two zones are mirror symmetric at least in axially and circumferentially extending regions. It is also possible that the entire zones are mirror symmetric.

Advantageously, the anchor bolt is, within the neck zone, provided with a plurality of longitudinally running neck zone grooves, and the anchor bolt is, within the intermediate zone, provided with a plurality of longitudinally running intermediate zone grooves. Having multiple grooves can multiply the advantages of a single groove. In this text, reference is repeatedly made to the properties of a single neck zone groove. If, however, there is a plurality of neck zone grooves, then at least one of the plurality of neck zone grooves can have these properties, or all of the plurality of neck zone grooves can have these properties, unless explicitly stated otherwise. Also, in this text, reference is repeatedly made to the properties of a single intermediate zone groove. If, however, there is a plurality of intermediate zone grooves, then at least one of the plurality of intermediate zone grooves can have these properties, or all of the plurality of intermediate zone grooves can have these properties, unless explicitly stated otherwise.

The number of neck zone grooves preferably equals the number of intermediate zone grooves and/or each of the plurality of neck zone grooves is aligned with one of the plurality of intermediate zone grooves. The higher symmetry resulting therefrom can further improve the manufacturing process and performance, due to the resulting symmetry of force during manufacturing and operation.

In the abutment zone, the anchor bolt preferably comprises an abutment ring, which radially protrudes on the anchor bolt, in particular with respect to both the neck zone and the intermediate zone. This abutment ring can form a forwardly-facing ring shoulder, which allows particularly efficient expansion shell engagement whilst being easy to manufacture in the inventive setup. The abutment ring surrounds the longitudinal axis of the anchor bolt. It protrudes on the anchor bolt in the radial direction, i.e. it juts out over its surroundings in the radial direction, in particular it juts out over the neck zone and the intermediate zone in the radial direction. The rear zone is spaced from the abutment ring, via the intermediate zone and if present via the bulged zone. In particular, the abutment ring can define the length, i.e. the longitudinal extension, of the abutment zone, i.e. the length of the abutment zone equals the length of the abutment ring. Preferably, the abutment ring is the abutment zone.

It is preferred that the at least one expansion shell engages into the at least neck zone groove. With such an arrangement, the neck zone groove can contribute to anchoring functionality, for example by accommodating material to be expanded or by contributing to a rotational lock.

Expediently, the expansion shell is an expansion sleeve surrounding the anchor bolt. This is particularly efficient and easy to manufacture.

In the rear zone, the anchor bolt preferably comprises an outer thread, as already mentioned above. This, whilst being easy to manufacture, allows particular efficient force transfer. A nut can be screwed onto the thread.

The invention also includes a method for manufacturing an inventive expansion anchor, wherein the anchor bolt of the expansion anchor is formed using a cross wedge rolling step. Due to its relatively high symmetry, the inventive design can facilitate cross wedge rolling. In particular, the at least one neck zone groove and the least one intermediate zone groove can be formed in a cross wedge rolling step process.

Features that are described here in connection with the inventive expansion anchor can also be used in connection with the inventive method and features that are described here in connection with the inventive method can also be used in connection with the inventive expansion anchor.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.
- Figure 1:: is a perspective view of an embodiment of an inventive expansion anchor;
- Figure 2:: is a perspective view of the anchor bolt only of the expansion anchor of figure 1;
- Figure 3:: is a side view of the anchor bolt only of the expansion anchor of figure 1;
- Figure 4:: is a cross-section, 4 - 4, according to figure 3, of the anchor bolt only of the expansion anchor of figure 1;
- Figure 5:: is a cross-section, 5 - 5, according to figure 3, of the anchor bolt only of the expansion anchor of figure 1; and
- Figure 6:: shows the anchor of figure 1, located in a hole in a substrate, in longitudinal sectional view.

The figures show an embodiment of an inventive expansion anchor. The shown expansion anchor is of the stud type and has an elongate anchor bolt 10 defining a longitudinal axis 99, and an expansion shell 30, arranged adjacent to the anchor bolt 10 in a front or tip region of the anchor bolt 10. In the present embodiment, the expansion shell 30 is an expansion sleeve, which surrounds the anchor bolt 10.

The anchor bolt 10 has, in its front region or tip region, a wedge zone 12 designed for radially expanding the expansion shell 30 when the wedge zone 12 is drawn into the expansion shell 30 in the rearwards direction, i.e. when the expansion shell 30 is moved forwards relative to the wedge zone 12 onto the wedge zone 12. For this purpose, the lateral surface of the anchor bolt 10 converges in the wedge zone 12 towards the rear of the anchor bolt 10, i.e. it converges towards the expansion shell 30, at least before the anchor is installed. Focus of convergence is preferably on the longitudinal axis 99.

In the present example, the anchor bolt 10 also has a transition zone 42, which is located forwards of and adjacent to the wedge zone 12, and a tip zone 41, which is located forwards of and adjacent to the transition zone 42. In the transition zone 42, the rearward convergence is smaller as compared to the wedge zone 12 or the rearward convergence is even zero, but preferably not reverse, i.e. it is not a forward convergence. In the present example, convergence is absent, i.e. zero, in the transition zone 42. In the tip zone 41, the lateral surface of the anchor bolt 10 converges towards the front end of the anchor.

The anchor bolt 10 has a neck zone 13, which is located adjacent to and rearwards of the wedge zone 12. The expansion shell 30 at least partly surrounds this neck zone 13, at least before installation the anchor.

Located at the rearward end of the neck zone 13, the anchor bolt 10 has an abutment zone 14, in which the anchor bolt 10 comprises an abutment ring, radially protruding on the anchor bolt 10 and forming a ring-shape shoulder facing forwards for axially engaging the expansion shell 30 and for advancing the expansion shell 30 forwards.

In the present case, the wedge zone 12 and the neck zone 13 are, by way of example, integral with the rest of the anchor bolt 10. However, a multi-piece design of the anchor bolt 10 is also possible.

In a rear region of the anchor bolt 10, the anchor bolt 10 has a rear zone 17, which is characterized in that the anchor bolt 10 is provided with an outer thread in this rear zone 17. The outer thread provides a load-introducing structure for introducing rearwardly-directed load into the anchor bolt 10.

Axially between the rear zone 17 and the abutment zone 14, the anchor bolt 10 has an intermediate zone 15, in which the maximum diameter d of the anchor bolt 10 is smaller when compared to the rear zone 17 and/or to the abutment zone 14. The rear zone 17 is adjacent to the abutment zone 14 and could be adjacent to the rear zone 17. However, in the present case, the anchor bolt 10 also has a bulged zone 16, located axially between the intermediate zone 15 und the rear zone 17. The bulged zone 16 is adjacent to the intermediate zone 15 and adjacent to the rear zone 17. The neck zone 13 and the intermediate zone 15 have the same length. The distance of the wedge zone 12 to the abutment zone 14 and the distance of the bulged zone 16 to the abutment zone 14 are the same.

The bulged zone 16 protrudes radially on the anchor bolt 10. In the bulged zone 16, the anchor bolt 10 has larger maximum radius r, measured from the longitudinal axis 99, than in the intermediate zone 15 and in the rear zone 17. Preferably, in the bulged zone 16, the anchor bolt 10 also has larger maximum diameter d than in the intermediate zone 15 and in the rear zone 17. Thus, the bulged zone 16 forms a ring surrounding the longitudinal axis 99, which juts out with respect to its surroundings. The bulged zone 16 can abut on the hole wall when the anchor is radially loaded, allowing force transfer to the substrate and thereby protecting the expansion mechanism provided by the wedge zone 12 and the expansion shell 30.

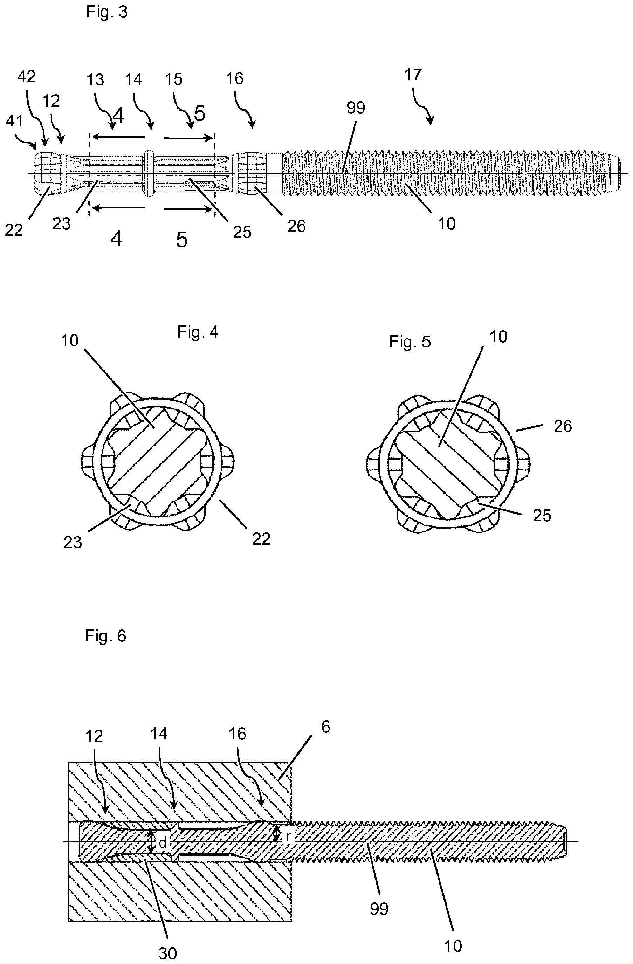

As can be seen particularly well in figure 6, in the bulged zone 16, the anchor bolt 10 preferably has larger maximum radius r, and preferably also larger maximum diameter d, than in the abutment zone 14, and more preferably also larger maximum radius r, and preferably also larger maximum diameter d, than in the wedge zone 12. This leads to particularly good support high up in the hole in the substrate 6. The radius r is measured originating from the longitudinal axis 99 and the diameter d through the longitudinal axis 99 in each case.

The expansion shell 30 is provided with a plurality of slits 36, which originate from the front end of the expansion shell 30 and extend towards the rear end of the expansion shell 30. The slits 36 can facilitate radial expansion of the expansion shell 30.

In the neck zone 13, the anchor bolt 10 is provided, on its lateral surface, with a plurality of neck zone grooves 23. These neck zone grooves 23 are radially accessible from the outside of the anchor bolt 10. The neck zone grooves 23 are longitudinal grooves each, extending parallel to the longitudinal axis 99. In cross-section, the neck zone 13 deviates from a circle at the neck zone grooves 23. The neck zone grooves 23 extend along the entire neck zone 13, into the wedge zone 12. The neck zone 13 is threadless.

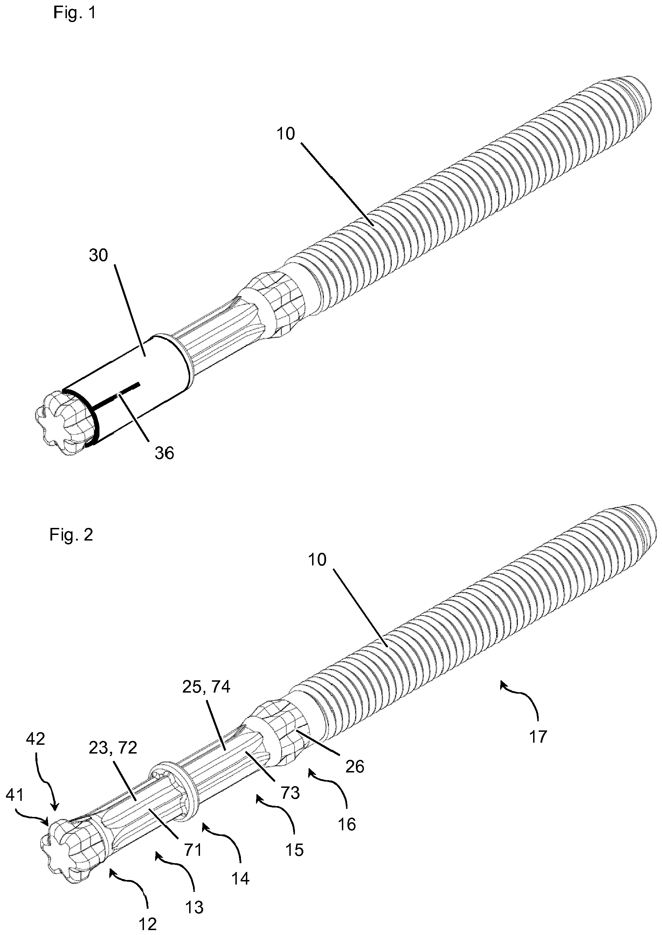

Each of the neck zone grooves 23 has a first neck zone groove side wall and a second neck zone groove side wall, wherein these two neck zone groove side walls limit the respective neck zone groove 23 in the circumferential direction. Thus, the neck zone groove side walls are circumferential side walls. In figure 2, the first neck zone groove side wall of an exemplary neck zone groove 23 has been marked with reference numeral 71 and the second neck zone groove side wall of this exemplary neck zone groove 23 has been marked with reference numeral 72.

The intermediate zone 15 is threadless. However, in the intermediate zone 15, the anchor bolt 10 is provided, on its lateral surface, with a plurality of intermediate zone grooves 25. These intermediate zone grooves 25 are radially accessible from the outside of the anchor bolt 10. The intermediate zone grooves 25 are longitudinal grooves each, extending parallel to the longitudinal axis 99. In cross-section, the intermediate zone 15 deviates from a circle at the intermediate zone grooves 25. The intermediate zone grooves 25 extend along the entire intermediate zone 15, into the bulged zone 16.

Each of the intermediate zone grooves 25 has a first intermediate zone groove side wall and a second intermediate zone groove side wall, wherein these two intermediate zone groove side walls limit the respective intermediate zone groove 25 in the circumferential direction. Thus, the intermediate zone groove side walls are circumferential side walls. In figure 2, the first intermediate zone groove side wall of an exemplary intermediate zone groove 25 has been marked with reference numeral 73 and the second intermediate zone groove side wall of this exemplary intermediate zone groove 25 has been marked with reference numeral 74.

Each of the intermediate zone grooves 25 overlaps one of the neck zone grooves 23 in the radial and circumferential directions. The intermediate zone grooves 25 and the neck zone grooves 23 are aligned, so that the intermediate zone grooves 25 form extensions of the neck zone grooves 23.

The expansion shell 30 engages in the neck zone grooves 23. For this purpose, the expansion shell has axially extending thickenings, which project into the neck zone grooves 23. This engagement can form a rotational lock, which prevents rotating of the expansion shell 30 around the anchor bolt 10.

The bulged zone 16 is provided with bulged zone channels 26, extending longitudinally through the bulged zone 16. The bulged zone channels 26 are surface grooves in the present case. The bulged zone channels 26 allow passage of a fluid medium, for example of a hardenable mortar. Moreover, the bulged zone channels 26 can take up material of the anchor bolt 10, facilitating deformation of the bulged zone 16 and therefore facilitating insertion of the anchor bolt 10 into a hole.

The wedge zone 12, the transition zone 42 and the tip zone 41 are provided with wedge zone channels 22, each extending longitudinally through the wedge zone 12, the transition zone 42 and the tip zone 41. These wedge zone channels 22 can facilitate manufacturing and/or improve installation and anchorage. The wedge zone channels 22 are aligned with the bulged zone channels 26. Both the wedge zone channels 22 and the bulged zone channels 26 are offset, in the circumferential direction, from both the neck zone grooves 23 and from the intermediate zone grooves 25, as can be seen particularly well in figures 4 and 5.

In its front region, the anchor bolt 10 has a relatively high mirror symmetry: the intermediate zone 15 is, within usual manufacturing tolerances, mirror symmetric to the neck zone 13, and the bulged zone 16 has some symmetric resemblance to the wedge zone 12, all with respect to a mirror plane running perpendicular to the longitudinal axis 99 through the abutment zone 14. Moreover, the wedge zone 12 is provided with longitudinally running surface grooves (namely the wedge zone channels 22), and so is the bulged zone 16 (namely the bulged zone channels 26), and at least parts of the bulged zone 16 have the same axial distance from the abutment zone 14 as at least parts of the wedge zone 12. This high symmetry can give a particular symmetric distribution of forces during a cross wedge rolling manufacturing process.

When the anchor is installed, it is introduced, front end first, into a hole in a substrate 6. Subsequently, the anchor bolt 10, together with its wedge zone 12, is pulled back rearwardly, in particular by tightening a not-shown nut provided on the thread of the rear zone 17 of the anchor bolt 10. As a consequence, the wedge zone 12 is drawn into the front-end region of the expansion shell 30 and the expansion shell 30 is radially displaced, thereby anchoring the expansion anchor. The resulting configuration is shown in figure 6. The bulged zone 16 is so dimensioned that it creates an interference fit with the substrate 6 when located in the hole.

## Claims

1. Expansion anchor comprising
- an anchor bolt (10), and
- at least one expansion shell (30) located at the anchor bolt (10),
- wherein the anchor bolt (10) comprises
- a wedge zone (12) for expanding the at least one expansion shell (30),
- a neck zone (13) accommodating at least parts of the expansion shell (30), the neck zone (13) being located rearwardly of the wedge zone (12),
- an abutment zone (14) forming a rearward stop for the expansion shell (30), the abutment zone (14) being located rearwardly of the neck zone (13),
- an intermediate zone (15), the intermediate zone (15) being located rearwardly of the abutment zone (14), and
- a rear zone (17) for intruding tensile force into the anchor bolt (10), the rear zone (17) being located rearwardly of the intermediate zone (15),
- wherein the anchor bolt (10) is, within the neck zone (13), provided with at least one longitudinally running neck zone groove (23),
**characterized in that**
- the anchor bolt (10) is, within the intermediate zone (15), provided with at least one longitudinally running intermediate zone groove (25).

2. Expansion anchor according to claim 1,
**characterized in that**
the at least one intermediate zone groove (25) is aligned with the at least one neck zone groove (23).

3. Expansion anchor according to any one of the proceeding claims,
**characterized in that**
the at least one neck zone groove (23) spans the entire neck zone (13) and/or the at least one intermediate zone groove (25) spans the entire intermediate zone (15).

4. Expansion anchor according to any one of the proceeding claims,
**characterized in that**
the intermediate zone (15) has greater length than the abutment zone (14) and/or the neck zone (13) has greater length than the abutment zone (14).

5. Expansion anchor according to any one of the proceeding claims,
**characterized in that**
the neck zone (13) and the intermediate zone (15) have same length.

6. Expansion anchor according to any one of the proceeding claims,
**characterized in that**
the intermediate zone (15) and the neck zone (13) have the same minimum radius (r) and/or the same maximum radius (r).

7. Expansion anchor according to any one of the proceeding claims,
**characterized in that**
the intermediate zone (15) and the neck zone (13) are, at least regionally, mirror symmetric.

8. Expansion anchor according to any one of the proceeding claims,
**characterized in that**
- the anchor bolt (10) is, within the neck zone (13), provided with a plurality of longitudinally running neck zone grooves (23), and
- the anchor bolt (10) is, within the intermediate zone (15), provided with a plurality of longitudinally running intermediate zone grooves (25).

9. Expansion anchor according to claim 8,
**characterized in that**
the number of neck zone grooves (23) equals the number of intermediate zone grooves (25).

10. Expansion anchor according to any one of claims 8 or 9,
**characterized in that**
each of the plurality of neck zone grooves (23) is aligned with one of the plurality of intermediate zone grooves (25).

11. Expansion anchor according to any one of the proceeding claims,
**characterized in that**
in the abutment zone (14), the anchor bolt (10) comprises an abutment ring, which radially protrudes on the anchor bolt (10).

12. Expansion anchor according to any one of the proceeding claims,
**characterized in that**
the at least one expansion shell (30) engages into the at least neck zone groove (23).

13. Expansion anchor according to any one of the proceeding claims,
**characterized in that**
the expansion shell (30) is an expansion sleeve surrounding the anchor bolt (10).

14. Expansion anchor according to any one of the proceeding claims,
**characterized in that**
in the rear zone (17), the anchor bolt (10) comprises an outer thread.

15. Method for manufacturing an expansion anchor according to any one of the proceeding claims, wherein the anchor bolt (10) of the expansion anchor is formed using a cross wedge rolling step.
